(19) Europäisches Patentamt
European Patent Office
Office européen des brevets

(11) **EP 2 633 345 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **11778521.2**

(22) Anmeldetag: **19.10.2011**

(51) Int Cl.:
*G02B 5/18* (2006.01)          *G07D 7/12* (2016.01)
*B42D 25/00* (2014.01)

(86) Internationale Anmeldenummer:
**PCT/EP2011/005273**

(87) Internationale Veröffentlichungsnummer:
**WO 2012/055506 (03.05.2012 Gazette 2012/18)**

(54) **SICHERHEITSELEMENT MIT OPTISCH VARIABLEM FLÄCHENMUSTER**

SECURITY ELEMENT WITH OPTICALLY VARIABLE SURFACE PATTERN

ÉLÉMENT DE SÉCURITÉ AVEC MOTIFS DE SURFACE VARIABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2010 DE 102010049600**

(43) Veröffentlichungstag der Anmeldung:
**04.09.2013 Patentblatt 2013/36**

(73) Patentinhaber: **Giesecke+Devrient Currency Technology GmbH**
**81677 München (DE)**

(72) Erfinder: **FUHSE, Christian**
**83624 Otterfing (DE)**

(74) Vertreter: **Zeuner Summerer Stütz Patent- und Rechtsanwälte Partnerschaft Nußbaumstraße 8 80336 München (DE)**

(56) Entgegenhaltungen:
**WO-A1-2010/034420     US-A- 5 919 551**
**US-B2- 6 974 218**

**Beschreibung**

Die Erfindung betrifft ein Sicherheitselement für Sicherheitspapiere, Wertdokumente und andere Datenträger, das in einem Flächenbereich ein optisch variables Flächenmuster enthält. Die Erfindung betrifft auch ein Verfahren zur Herstellung eines derartigen Sicherheitselements und einen Datenträger mit einem solchen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

Oft ist erwünscht, dass die optisch variablen Sicherheitselemente ein möglichst achromatisches, also nicht farbaufgespaltenes Erscheinungsbild zeigen. Dazu werden meist entweder periodische Strukturen (Beugungsgitter) und/ oder periodische Anordnungen von Strukturen, wie etwa eine Pixelanordnung von Mikrospiegeln benutzt. Bekannte optisch variable Sicherheitselemente können dabei grob eingeteilt werden in a) reflektierende Elemente, die im Wesentlichen den Gesetzen der geometrischen Optik folgen und b) beugende Elemente, die den Gesetzen der Beugungsoptik folgen.

Bei Elementen der Gruppe b) liegen dabei sehr kleine Strukturgrößen in einem Größenbereich vor, in dem periodische Strukturen einem Betrachter deutlich farbig erscheinen. Zur Erzeugung eines achromatischen Eindrucks müssen daher entweder aperiodische Strukturen benutzt oder Gitter unterschiedlicher Perioden kombiniert werden, so dass sich die Farben der Einzelgitter im Beugungsbild zu Weiß ergänzen. Bei Elementen der Gruppe a) sind die Strukturgrößen hingegen ohnehin so groß, dass die genaue Periode keine wesentliche Rolle spielt.

Aus der Druckschrift EP 0 868 313 B1 ist ein optisch variables Flächenmuster auf Basis beugungsoptisch wirksamer Sägezahngitter bekannt. Deren Periode ist dabei so groß zu wählen, dass im sichtbaren Spektrum die Beugungsreflexe bei unterschiedlichen Wellenlängen möglichst eng zusammen liegen, so dass sie von einem Betrachter nicht mehr getrennt wahrgenommen werden können. Damit sollen praktisch alle Farben in dieselbe, durch den Neigungswinkel der Sägezähnelemente gegebene Richtung gebeugt werden, und das Sicherheitselement erscheint unter den meisten Beleuchtungsbedingungen achromatisch. Ein weiteres Gitterbild mit achromatischen Gitterfeldern ist des Weiteren aus WO-2010/034420 (A1) bekannt. Bei sehr kleiner Gitterperiode werden jedoch die Beugungsreflexe des Gitters deutlich sichtbar. Folglich werden derartige Anordnungen mit abnehmender Gitterperiode immer bunter. Weiterhin stören solche Beugungseffekte auch die kinematischen Effekte der Sicherheitselemente oder von gewölbt erscheinende Darstellungen, die das Reflexionsverhalten gewölbter Flächen imitieren. Dennoch ist eine möglichst kleine Periode in vielen Fällen wünschenswert, da dünne Strukturen leichter herzustellen sind und leichter in Banknoten oder andere Datenträger integriert werden können.

Ausgehend davon liegt der Erfindung die Aufgabe zugrunde, ein Sicherheitselement der eingangs genannten Art weiter zu verbessern und insbesondere ein einfach und kostengünstig herstellbares, optisch variables Sicherheitselement mit hoher Fälschungssicherheit und attraktivem visuellen Erscheinungsbild zu schaffen. Idealerweise zeigt das Sicherheitselement ein achromatisches Erscheinungsbild ohne störende Farbaufspaltungen oder überlagerte Beugungsmuster.

Diese Aufgabe wird durch die Merkmale der unabhängigen Ansprüche gelöst. Weiterbildungen der Erfindung sind Gegenstand der Unteransprüche.

Gemäß der Erfindung enthält ein Sicherheitselement der eingangs genannten Art ein optisch variables Flächenmuster, das aus einer zumindest lokal periodischen Anordnung von im Wesentlichen strahlenoptisch wirkenden Reflexionselementen besteht, und bei dem die Reflexionselemente in ihrer Höhe über dem Flächenbereich aperiodisch gegeneinander versetzt sind.

Anders als bei einer periodischen Versetzung gibt es bei einer aperiodischen Versetzung der Reflexionselemente keinen einfachen, regelmäßigen Zusammenhang zwischen den Höhen benachbarter Reflexionselemente. Dadurch wird eine konstruktive Interferenz des an benachbarten Reflexionselementen reflektierten Lichts und damit das Entstehen eines überlagerten Beugungsmusters zuverlässig verhindert.

Bevorzugt variiert die Höhe der Reflexionselemente über dem Flächenbereich gemäß einer Pseudozufallszahlenverteilung. Pseudozufallszahlen sind Zahlenfolgen, die zwar zufällig erscheinen, aber durch einen deterministischen Algorithmus berechnet werden und daher im strengen Sinn keine echten Zufallszahlen sind. Dennoch werden Pseudozufallszahlen verbreitet eingesetzt, da die statistischen Eigenschaften einer Pseudozufallszahlenverteilung, wie Gleichwahrscheinlichkeit der einzelnen Zahlen oder die statistische Unabhängigkeit aufeinanderfolgender Zahlen, für praktische Zwecke in der Regel ausreichen und Pseudozufallszahlen mit Computern im Gegensatz zu echten Zufallszahlen einfach zu erzeugen sind. Eine Pseudozufallszahlenverteilung ist stets aperiodisch im Sinn der vorliegenden Anmeldung, da es bei einer Pseudozufallszahlenverteilung keinen festen, konstanten Abstand ("Periode") aufeinanderfolgender Werte gibt.

Eine aperiodische Variation der Höhenwerte ist allerdings nicht auf Pseudozufallszahlenverteilungen beschränkt, sondern kann auch durch eine andere unregelmäßige Verteilung der Höhenwerte erreicht werden.

Bevorzugt sind die Reflexionselemente um einen Höhenversatz gegeneinander versetzt, der zwischen 0 und $\Delta H_{max}$ liegt, wobei der Wert von $\Delta H_{max}$ zwischen 50 nm und 2000 nm, vorzugsweise zwischen 100 nm und 500 nm liegt. Der Wert von $\Delta H_{max}$ wird dabei zweckmäßig größer als eine halbe Wellenlänge im interessierenden Wellenlängenbereich gewählt. Ist das optisch variable Flächenmuster in ein Medium mit Brechungsindex n > 1 eingebettet, beispielsweise in eine transparente Schutzlackschicht, kann der Höhenversatz auf 1/n des oben angegebenen Werts reduziert werden. So genügt beispielsweise bei einer Einbettung in einen Schutzlack mit n=1,5 ein maximaler Höhenversatz von $\Delta H_n$ = 260 nm, um alle Wellenlängen aus dem sichtbaren Spektralbereich abzudecken, wie sich aus $\Delta H_n$ = (780 nm/2)/n ergibt.

In vorteilhaften Erfindungsvarianten bildet die Anordnung der Reflexionselemente zumindest lokal ein periodisches eindimensionales Gitter, oder bildet zumindest lokal ein periodisches zweidimensionales Bravaisgitter. Die Reflexionselemente können dabei global periodisch angeordnet sein, oder sie können nur lokal periodisch angeordnet sein, wobei sich die lokalen Periodenparameter im Verhältnis zur Periodizitätslänge nur langsam ändern. Beispielsweise können die lokalen Periodenparameter über die Ausdehnung des Sicherheitselements periodisch moduliert sein, wobei die Modulationsperiode vorzugsweise mindestens 20-mal, bevorzugt mindestens 50-mal, besonders bevorzugt mindestens 100-mal größer ist, als die lokale Periodizitätslänge. Eine derartige, langsame Änderung der lokalen Periodenparameter berührt die grundlegenden lokalen Eigenschaften, insbesondere die Beugungseigenschaften der Gitter nicht. Wegen der langsamen Änderung der Periodenparameter können solche Anordnungen lokal stets mit hinreichender Genauigkeit durch Bravais-Gitter mit konstanten Gitterparametern beschrieben werden.

Die Periodizitätslänge bzw. die lokale Periodizitätslänge liegt im Rahmen der Erfindung mit Vorteil in mindestens einer Periodizitätsrichtung zwischen 1 $\mu$m und 40 $\mu$m, bevorzugt zwischen 2 $\mu$m und 30 $\mu$m, und besonders bevorzugt zwischen 3 $\mu$m und 10 $\mu$m. Entsprechend liegen die Abmessungen der Reflexionselemente in Periodizitätsrichtung zwischen 1 $\mu$m und 40 $\mu$m, bevorzugt zwischen 1,5 $\mu$m und 30 $\mu$m, und besonders bevorzugt zwischen 2 $\mu$m und 10 $\mu$m. Insbesondere können die Abmessungen der Reflexionselemente auch kleiner als die Periodizitätslänge sein.

Das optisch variable Flächenmuster zeigt insbesondere ein achromatisches Erscheinungsbild, ohne Farbaufspaltungen oder überlagerte Beugungsbilder.

Die Reflexionselemente können vielfältige Formen haben und sind vorzugsweise durch Mikroplanspiegel, Mikrohohlspiegel, Mikrowölbspiegel oder durch reflektierende Pyramidenstrukturen gebildet. Mit Vorteil sind die Reflexionselemente durch eine mit einer reflektierenden Schicht versehene Reliefstruktur, insbesondere eine Prägereliefstruktur gebildet. Die reflektierende Schicht kann dabei beispielsweise durch eine reflektierende opake Metallschicht oder durch eine dünne oder gerasterte semitransparente metallische Beschichtung gebildet sein. Die reflektierende Schicht kann auch durch eine farbige oder farbkippende reflektierende Beschichtung gebildet sein, vorzugsweise durch ein Dünnschichtelement mit einer Reflexionsschicht, einer Absorberschicht und einer zwischen der Reflexionsschicht und der Absorberschicht angeordneten dielektrischen Abstandsschicht oder durch ein Dünnschichtelement mit zwei Absorberschichten und einer zwischen den beiden Absorberschichten angeordneten dielektrischen Abstandsschicht. Schließlich kann die reflektierende Schicht mit Vorteil auch durch eine hochbrechende dielektrische Beschichtung oder eine cholesterische Flüssigkristallschicht gebildet sein.

In einer vorteilhaften Weiterbildung enthält das optisch variable Flächenmuster mehrere Teilbereiche, die unterschiedliche Darstellungen zeigen. Das optisch variable Flächenmuster kann auch mit einem weiteren Sicherheitsmerkmal, wie etwa einem Hologramm, kombiniert sein. Die Gesamtdicke des Sicherheitselements liegt vorzugsweise unterhalb von 50 $\mu$m, bevorzugt unterhalb von 30 $\mu$m und besonders bevorzugt unterhalb von 20 $\mu$m. Derart kleine Gesamtdicken können erfindungsgemäß erzeugt werden, da durch den aperiodischen Höhenversatz auch sehr kleine Gitterperioden mit entsprechend geringen Strukturhöhen ohne störende Farbaufspaltungen und überlagerte Beugungsbilder verwendet werden können.

Die Erfindung enthält auch einen Datenträger, insbesondere ein Sicherheitspapier oder Wertdokument, mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote handeln, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Gegenstand der Erfindung ist weiter eine Prägeform zum Erzeugen einer Prägestruktur, mit einem vorzugsweise metallischen Hauptkörper, der in einem Flächenbereich ein optisch variables Flächenmuster enthält, welches bei unterschiedlicher Beleuchtungs- und/oder Betrachtungsrichtung unterschiedliche Darstellungen zeigt, wobei das optisch variable Flächenmuster aus einer zumindest lokal periodischen Anordnung von im Wesentlichen strahlenoptisch wirkenden Reflexionselementen besteht, und bei dem die Reflexionselemente in ihrer Höhe über dem Flächenbereich aperiodisch gegeneinander versetzt sind.

Die Prägeform stellt in der Regel die Negativform des in der Prägestruktur gewünschten Flächenmusters dar. Mit Hilfe der Prägeform wird das gewünschte Zielsubstrat, beispielsweise eine auf einer Folie aufgebrachte thermoplastische oder UV-härtbare Lackschicht, geprägt und so mit dem gewünschten Flächenmuster versehen. Entsprechende Verfahren sind dem Fachmann bekannt und im Stand der Technik beschrieben.

Die Erfindung betrifft weiter ein Verfahren zum Herstellen eines Sicherheitselements zur Absicherung von Sicherheitspapieren, Wertdokumenten und andere Datenträgern, bei dem ein Substrat bereitgestellt wird und das Substrat in einem Flächenbereich mit einem optisch variablen Flächenmuster versehen wird, welches bei unterschiedlicher Beleuchtungs- und/oder Betrachtungsrichtung unterschiedliche Darstellungen zeigt, wobei das optisch variable Flächenmuster aus einer zumindest lokal periodischen Anordnung von im Wesentlichen strahlenoptisch wirkenden Reflexionselementen gebildet wird, und die Reflexionselemente in ihrer Höhe über dem Flächenbereich aperiodisch gegeneinander versetzt werden.

Die Art der Darstellung erfindungsgemäßer Sicherheitselemente ist nicht beschränkt. Beispielsweise können mit den erfindungsgemäßen optisch variablen Flächenmustern Flipbilder erzeugt werden, die zwei oder mehr Bereiche mit unterschiedlichen Motiven aufweisen, die aus verschiedenen Betrachtungsrichtungen hell aufleuchten, wie sie in den Druckschriften EP 0 868 313 B1 und EP 1397 259 B1 für beugungsoptisch wirksame Gitterstrukturen beschrieben sind. Auch kinematische Effekte, wie sie in den Druckschriften EP 0 868 313 B1 und WO 2007/079851 beschrieben sind, können mit den erfindungsgemäßen optisch variablen Flächenmustern erzeugt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1 eine schematische Darstellung einer Banknote nach einem Ausführungsbeispiel der Erfindung,

Fig. 2 ein Sicherheitselement, das einen kinematischen Effekt in Form eines wandernden hellen Balkens aufweist,

Fig. 3 einen Ausschnitt des an der Oberfläche des Sicherheitselements der Fig. 2 angeordneten Sägezahngitters,

Fig. 4 das Beugungsbild eines Sägezahngitters mit N = 10 Sägezahnelementen mit einem Neigungswinkel von $\delta$ = 6° und einer Periodizitätslänge von a = 6 $\mu$m,

Fig. 5 in (a) ein Sägezahngitter, bei dem das j-te Sägezahnelement gegenüber den anderen Sägezahnelementen um eine Höhendifferenz $\Delta H_j$ in seiner Höhe versetzt ist, und in (b) ein Sägezahngitter, bei dem alle Sägezahnelemente in aperiodischer Weise versetzt sind,

Fig. 6 für eine Wellenlänge von 500 nm berechnete Beugungsbilder, in (a) das Beugungsbild eines Sägezahngitters ohne Höhenvariationen und in (b) bis (d) Beugungsbilder erfindungsgemäßer Sägezahngitter mit jeweils N = 10 Sägezahnelementen und unterschiedlichen maximalen Höhenvariationen $\Delta H_{max}$,

Fig. 7 in (a) das Beugungsbild eines Sägezahngitters wie in Fig. 6(d), allerdings mit N = 100 Sägezahnelementen, und in (b) das geglättete Beugungsbild von (a), das die Auflösung des menschlichen Auges bei einem Betrachtungsabstand von 30 cm berücksichtigt, und

Fig. 8 in (a) bis (e) jeweils in Aufsicht Ausschnitte aus erfindungsgemäßen Gestaltungen mit zweidimensionaler Gittersymmetrie.

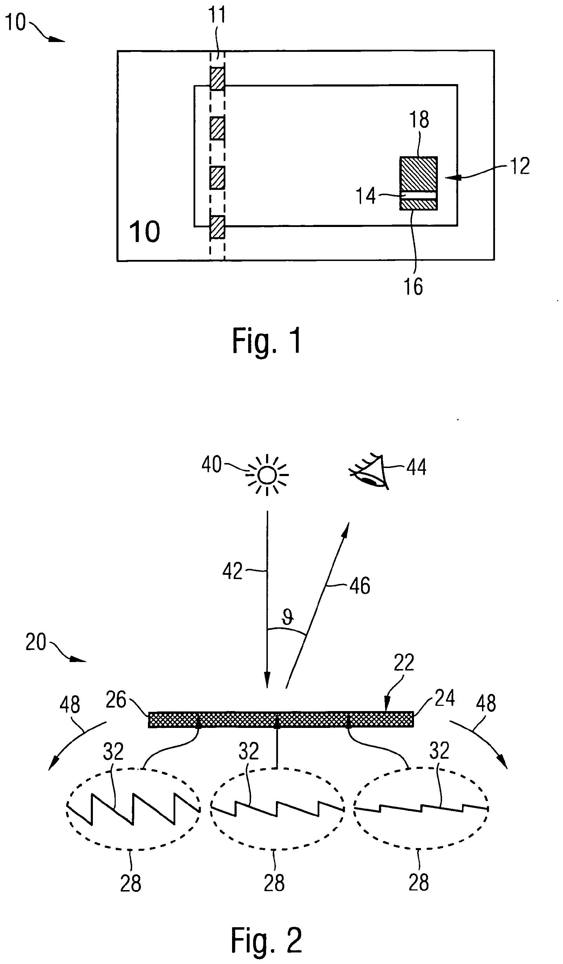

Die Erfindung wird nun am Beispiel von Sicherheitselementen für Banknoten erläutert. Fig. 1 zeigt dazu eine schematische Darstellung einer Banknote 10, die mit zwei erfindungsgemäßen Sicherheitselementen 11 und 12 versehen ist. Das erste Sicherheitselement stellt einen Sicherheitsfaden 11 dar, der an bestimmten Fensterbereichen an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 12 beliebiger Form gebildet.

Bei Betrachtung zeigen die Sicherheitselemente 11 und 12 jeweils einen kinematischen Effekt, bei dem sich ein heller Balken 14 zwischen der Unterkante 16 und der Oberkante 18 des Transferelements 12 bzw. der an der Oberfläche der Banknote hervortretenden Fensterbereiche des Sicherheitsfadens 11 hin und her bewegt, wenn der Betrachter seine Position zum Sicherheitselement verändert oder die Banknote nach vorne oder hinten kippt.

Die Besonderheit der erfindungsgemäßen Sicherheitselemente 11 und 12 besteht dabei insbesondere darin, dass sie einerseits eine sehr kleine Prägetiefe von beispielsweise 3 $\mu$m oder weniger und daraus folgend eine besonders geringe Gesamtdicke aufweisen, und dass sie andererseits ein völlig achromatisches Erscheinungsbild hoher Brillanz zeigen, also bei hoher Helligkeit des wandernden Balkens 14 frei von störenden Farbaufspaltungen oder überlagerten Beugungsbildern sind. Darüber hinaus wandert der helle Balken 14 beim Kippen der Banknote 10 kontinuierlich und ohne störende Sprünge oder Helligkeitsschwankungen (Flackern) über die Fläche der Sicherheitselemente 11 bzw. 12.

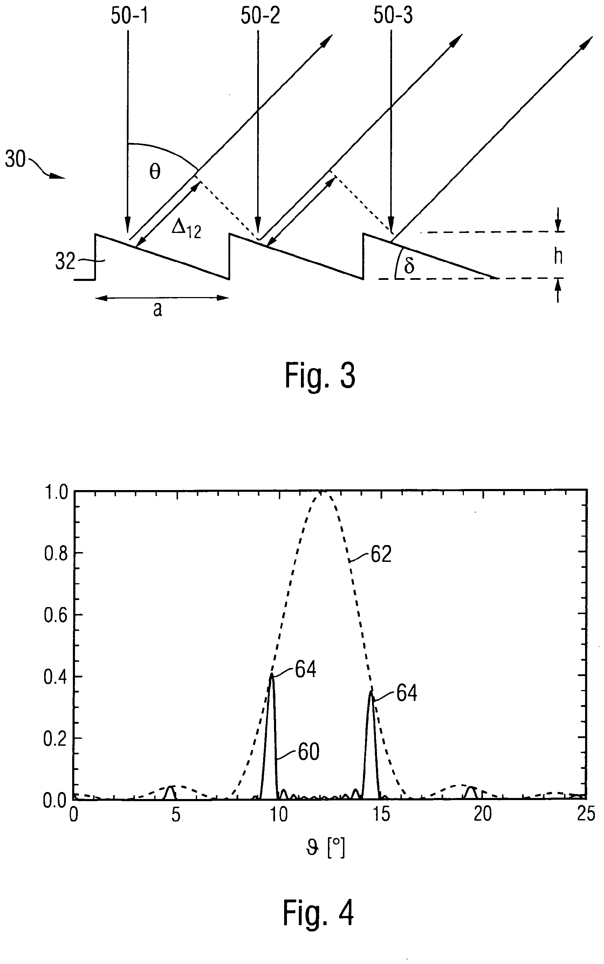

Um das Verständnis der vorliegenden Erfindung zu erleichtern und die Leistung der Erfindung besser beurteilen zu können, werden zunächst anhand der Figuren 2 und 3 die Schwierigkeiten und Nachteile bekannter Gestaltungen erläutert.

Fig. 2 zeigt dazu ein Sicherheitselement 20, das wie das erfindungsgemäße Sicherheitselement 12 einen kinematischen Effekt in Form eines wandernden hellen Balkens zeigt. Das Sicherheitselement 20 weist dazu an seiner Oberfläche 22 ein reflektierendes Sägezahngitter 30 auf, von dem in Fig. 3 ein kleiner Ausschnitt gezeigt ist. Das Sägezahngitter 30 enthält eine Mehrzahl reflektierender Sägezahnelemente 32 mit einer Periodizitätslänge a und einem Neigungswinkel $\delta$, wobei der Neigungswinkel $\delta$ der Sägezahnelemente 32 nicht konstant ist, sondern von der Unterkante 24 zur Oberkante 26 des Sicherheitselements hin linear von 0° auf 10° ansteigt. Dieser Anstieg des Neigungswinkels der Sägezahnelemente 32 ist in den drei Detailausschnitten 28 der Fig. 2 veranschaulicht.

Ein Betrachter 44 sieht dann stets denjenigen Bereich des Sicherheitselements 20 hell aufleuchten, in dem der Neigungswinkel $\delta$ der Sägezahnelemente 32 gerade dem halben Betrachtungswinkel $\theta$ entspricht, in dem also die Sägezahnelemente 32 strahlenoptisch das von der Lichtquelle 40 einfallende Licht 42 zum Betrachter 44 reflektieren 46. Bewegt sich der Betrachter von $\theta = 0°$ zu $\theta = 20°$, so wandert aus seiner Sicht ein heller Balken von der Unterkante 24 zur Oberkante 26 des Sicherheitselements. Ein entsprechender Effekt ergibt sich, wenn der Betrachter bei festem Betrachtungswinkel das Sicherheitselement 20 in Pfeilrichtung 48 kippt.

Ist die Periodizitätslänge a des Sägezahngitters 30 sehr groß, beispielsweise a = 1 mm oder mehr, so werden keine störenden Farbaufspaltungen oder Beugungsmuster beobachtet. Allerdings bedingt die große Periodizitätslänge dann eine große Strukturhöhe h der Sägezahnelemente 32, da die Höhe der Sägezahnelemente 32 proportional zu ihrer Breite bzw. zur Periodizitätslänge a ist.

In der Praxis ist meist eine möglichst kleine Periodizitätslänge wünschenswert, da beispielsweise die mit Prägetechniken erreichbare Strukturhöhe begrenzt ist. Auch innerhalb der mit Prägetechniken erzeugbaren Strukturgrößen sind kleinere Strukturen aufgrund dünner Prägelackschichten kostengünstiger und mit Blick auf den möglichen Einschluss von Luftblasen einfacher zu prägen als höhere Strukturen. Dünne Prägelackschichten können zudem eine bessere Beständigkeit aufweisen, da eine dünne Lackschicht unter Verformung weniger schnell bricht als eine dicke Lackschicht. Große Periodizitätslängen reduzieren schließlich auch die Auflösung der von dem Sägezahngitter erzeugten Darstellungen, was beispielsweise bei detailreichen Flip- oder Multiflipbildern oder kinematischen Effekten schnell sichtbar werden kann.

Wird die Periodizitätslänge a eines Sägezahngitters 30 verringert, so treten allerdings zunehmend Beugungsreflexe des Gitters in Erscheinung, die die gewünschten Darstellungen überlagern. Mit abnehmender Gitterperiode a erscheinen die eigentlich achromatisch gewünschten Darstellungen daher immer bunter. Wird mit einem Sägezahngitter eine gewölbt erscheinende Darstellung erzeugt, die das Reflexionsverhalten gewölbter Flächen imitiert, wie etwa in der ebenfalls anhängigen Anmeldung DE 10 2009 056 934.0 beschrieben, so können beim Kippen des Sägezahngitters unerwünschte Sprünge auftreten, da Sägezahngitter, anders als makroskopische, gewölbte Oberflächen, monochromatisches Licht nicht in beliebige, sondern nur in diskrete Richtungen reflektieren können. Bei der Imitation einer gewölbten Oberfläche durch ein Sägezahngitter können Lichtreflexe beim Drehen daher oft nicht kontinuierlich über die Fläche wandern, sondern springen von einer diskreten Position in die nächste. Verwendet man zur Betrachtung weißes Licht, so bildet sich ein oft irritierendes, unerwünschtes buntes Beugungsmuster. Ähnliches gilt für kinematische Effekte, die auf Basis periodischer Beugungsgitter mit kleiner Periode ebenfalls nicht beliebig weich verlaufen können, wie in Zusammenhang mit den Fig. 2 bis 4 weiter unten nochmals genauer beschrieben.

Das den überlagerten Beugungsmustern zugrunde liegende physikalische Prinzip kann anhand der Darstellung der Fig. 3 erläutert werden, die ein einfaches Modell zur Beugung senkrecht einfallenden Lichts 50 an einem Sägezahngitter 30 mit einer Periode a und einem Neigungswinkel $\delta$ zeigt. Die Lichtstrahlen 50-1, 50-2 und 50-3 sollen an dem Sägezahngitter 30 unter einem Winkel $\theta$ reflektiert werden. Der Gangunterschied $\Delta_{12}$ der am ersten und zweiten Sägezahnelement 32 reflektierten Lichtstrahlen ist dabei $\Delta_{12}$ = a sin0. Genau der gleiche Gangunterschied besteht zwischen den am zweiten und dritten Sägezahnelement reflektierten Strahlen, den zwischen dritten und vierten Sägezahnelement reflektierten Strahlen, etc. Bei sehr vielen Sägezahnelementen 32 tritt somit insgesamt nur im Falle konstruktiver Interferenz eine nennenswerte Reflexion auf, also wenn der Gangunterschied von an benachbarten Sägezahnelementen reflektierten Strahlen ein ganzzahliges Vielfaches der Wellenlänge $\lambda$ ist.

Die zugehörigen Richtungen $\theta_m$ sind die Richtungen der entsprechenden Gitterbeugungsordnungen und durch

$$m\,\lambda = a\,\sin\theta_m \qquad\qquad (1)$$

gegeben, wobei m eine ganze Zahl ist.

Genauer kann die Beugung an dem Sägezahngitter 30 wellenoptisch in Fraunhofernäherung, also in großem Abstand vom Sägezahngitter beschrieben werden.

Ausgangspunkt dieser wellenoptischen Betrachtung sei zunächst ein Beugungsgitter aus N identischen Spalten der Breite b und einer Periode a. Die komplexe Amplitude E des elektrischen Felds im Beugungsbild eines solchen Gitters ergibt sich als Überlagerung der Amplituden $E_j$ (siehe E. Hecht, Optics, 4th edition, Addision Wesley, 2002, Kapitel 10.2.3)

$$E = \sum_{j=1}^{N} E_j$$

Dabei erhält man den Beitrag $E_j$ des j-ten Spalts aus dem Beitrag des ersten Spalt $E_1$ durch

$$E_j = E_1 \exp(ik\Delta_{1j})$$

wobei $\Delta_{1j}$ = a (j-1) sin θ den Gangunterschied der vom ersten und *j*-ten Spalt ausgehenden Lichtwellen ist und $k = 2\pi / \lambda$ die Wellenzahl bezeichnet. Damit ergibt sich

$$E = \sum_{j=1}^{N} E_1 \exp(ik\Delta_{1j}) = E_1 \sum_{j=1}^{N} \exp(ik\Delta_{1j})$$

und für die Intensität I = $|E|^2$ des reflektierten Lichts folgt

$$I = I_1 \left| \sum_{j=1}^{N} \exp(ik\Delta_{1j}) \right|^2 \tag{2}$$

Die Intensität $I_1$ des ersten Einzelspalts unter einem Beugungswinkel θ ist dabei gegeben durch

$$I_1(\theta) = I_{10} \left( \frac{\sin \beta}{\beta} \right)^2$$

mit einer Konstanten $I_{10}$ und $\beta = (kb/2)\sin\theta$. Im Falle eines periodischen Gitters bildet die Summe der Beziehung (2) eine geometrische Reihe und man erhält für die Intensität im Beugungsbild des Spaltgitters

$$I_G(\theta) = I_0 \left( \frac{\sin \beta}{\beta} \right)^2 \left( \frac{\sin N\alpha}{\alpha} \right)^2 .$$

$I_0$ ist hier wieder eine Konstante und $\alpha = (ka/2)\sin\theta$. Der Term in der ersten Klammer gibt das Beugungsverhalten eines einzelnen Spalts bzw. Spiegels wieder, während der zweite Term aus der periodischen Gitteranordnung resultiert.

In einem einfachen Modell kann man für ein Sägezahngitter nun annehmen, dass b und a durch die Periode des Sägezahngitters gegeben sind und dass der Neigungswinkel δ der Sägezahnelemente 32 das Beugungsbild lediglich um den doppelten Neigungswinkel verschiebt. Damit ergibt sich für die Intensität im Beugungsbild des Sägezahngitters

$$I_S(\theta) = I_0 \left( \frac{\sin \gamma}{\gamma} \right)^2 \left( \frac{\sin N\alpha}{\alpha} \right)^2 \tag{3}$$

mit $\gamma = (kb / 2) \sin(\theta - 2\delta)$.

Zur Veranschaulichung zeigt Fig. 4 das Beugungsbild 60 eines Sägezahngitters 30 mit N = 10 Sägezahnelementen 32 mit einem Neigungswinkel von $\delta$ = 6° und einer Periodizitätslänge von a = 6 $\mu$m.

Dabei beeinflusst der Neigungswinkel $\delta$ den ersten Term in Beziehung (3) so, dass die Einhüllende 62 eines Einzelsägezahnelements entsprechend wandert, während der zweite Term in Beziehung (3) dafür sorgt, dass bei monochromatischer Beleuchtung nur an den durch die Gitterperiode vorgegebenen Positionen Intensität ankommt. Diese Positionen liegen bei einer Wellenlänge von 500 nm in diesem Beispiel etwa 5° auseinander.

Bei einem Neigungswinkel von $\delta$ = 6° liegt das Maximum des Einzelzahn-Beugungsbilds bei 12°, wie durch die Einhüllende 62 angegeben. Wie aus Fig. 4 weiter unmittelbar ersichtlich, verhindert die regelmäßige Gitteranordnung dennoch, dass bei $\theta$ = 12° nennenswert Intensität ankommt. Das Sägezahngitter 30 kann in diesem Fall also nicht genau in die durch den Neigungswinkel vorgegebene Richtung reflektieren. Stattdessen verteilt sich die reflektierte Intensität auf die nächstgelegenen Positionen 64 der Gitterreflexe nach Beziehung (1), die bei etwa $\theta$ = 10° bzw. $\theta$ = 15° liegen.

Wird somit das Sicherheitselement 20 der Fig. 2 beispielsweise mit dem periodischen Sägezahngitter 30 der Fig. 3 mit einer Periodizitätslänge von a = 6 $\mu$m realisiert, so führen die Beugungseffekte der Gitterstruktur dazu, dass der Beobachter 44 nur unter den diskreten Positionen der Gitterreflexe helle Bereiche auf dem Sicherheitselement 20 sieht, hier beispielsweise also etwa bei $\theta$ = 0°, $\theta$ = 5°, $\theta$ = 10°, $\theta$ = 15° und $\theta$ = 20°. Diese Positionen entsprechen gerade den lokalen Maxima des in Fig. 4 gezeigten Beugungsbilds 60.

Bewegt sich der Betrachter 44 nun von $\theta$ = 0° zu $\theta$ = 20°, so wandert der erkennbare helle Balken nicht kontinuierlich von der Unterkante 24 zur Oberkante 26, sondern er springt mit starken Helligkeitsschwankungen zur Position des nächsten Gitterreflexes. Im praxisnäheren Fall weißer Beleuchtung ist ein Flackern zu beobachten und der Balken ändert je nach Betrachtungsrichtung seine Farbe, da sich der Beobachter bei unterschiedlichen Betrachtungsrichtungen in den Beugungsmaxima unterschiedlicher Wellenlängen befindet. Der gleiche Effekt tritt auch dann auf, wenn der Betrachter und die Lichtquelle ortsfest bleiben und dafür das Sicherheitselement gedreht wird. Der Effekt wirkt bei Gittern mit kleinen Perioden sehr störend und betrifft neben kinematischen Effekten auch die oben angesprochenen gewölbt erscheinenden Darstellungen, bei denen ebenfalls kontinuierlich variierende Neigungswinkel vorliegen.

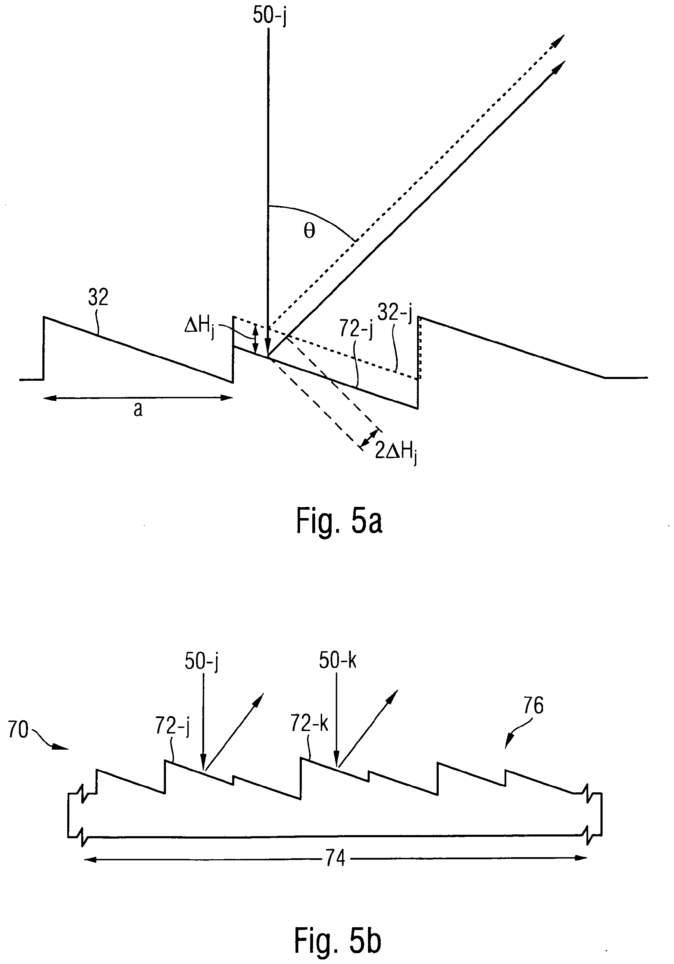

Wirkungsvolle Abhilfe schafft hier die erfindungsgemäße aperiodische Versetzung der Höhe der Sägezahnelemente 32. Zur Erläuterung zeigt Fig. 5(a) zunächst im einfachen strahlenoptischen Bild ein Sägezahngitter 30 mit einer Mehrzahl an Sägezahnelementen 32. Das j-te Sägezahnelement 72-j ist dabei gegenüber den anderen Sägezahnelementen 32 um eine Höhendifferenz $\Delta H_j$ in seiner Höhe versetzt. Das unversetzte Sägezahnelement 32-j ist in der Figur zur Illustration noch mit gestrichelten Linien eingezeichnet. Durch die Versetzung des Sägezahnelements 72-j verändert sich der Gangunterschied des reflektierten Lichtstrahls 50-j zu den anderen reflektierten Lichtstrahlen 50 um etwa 2 $\Delta H_j$. Wird der Höhenversatz $\Delta H_j$ also zufällig im Bereich zwischen Null und mindestens einer halben Wellenlänge gewählt, so erhält man eine zufällige Veränderung des Gangunterschieds des reflektierten Lichtstrahls 50-j zu den anderen reflektierten Lichtstrahlen im Bereich zwischen Null und mindestens einer ganzen Wellenlänge.

Werden nun alle Sägezahnelemente in aperiodischer, insbesondere in unregelmäßige Weise um einen Höhenversatz zwischen Null und mindestens einer halben Wellenlänge versetzt, wie anhand des Sägezahngitters 70 der Fig. 5(b) illustriert, so verändern sich alle Gangunterschiede $\Delta_{jk}$ des unversetzten Sägezahngitters 30 in unregelmäßiger Weise um einen Wert zwischen Null und mindestens einer ganzen Wellenlänge. Die an unterschiedlichen Sägezahnelementen 72-j und 72-k reflektierten Lichtstrahlen 50-j und 50-k stehen dann in einer zufälligen Phasenbeziehung, so dass das Sägezahngitter 70 trotz der regelmäßigen und periodischen Anordnung der Sägezahnelemente 72 in der Ebene des Flächenbereichs 74 nicht mehr als Beugungsgitter wirkt. Das optisch variable Flächenmuster 76 der Fig. 5(b) besteht somit aus einer periodischen Anordnung von im Wesentlichen strahlenoptisch wirkenden Reflexionselementen 72-j, 72-k, die in ihrer Höhe über dem Flächenbereich 74 aperiodisch gegeneinander versetzt sind, und das ein achromatisches Erscheinungsbild ohne Farbaufspaltungen oder überlagerte Beugungsbilder zeigt.

Geht man von dem anschaulichen strahlenoptischen Bild zur wellenoptischen Behandlung in Fraunhofernäherung über, so kann man die Versetzung des j-ten Sägezahnelements 72-j dadurch berücksichtigen, dass der Gangunterschied $\Delta_{1j}$ zum ersten Sägezahnelement in Beziehung (2) durch

$$\Delta_{1j} = a\,(j\text{-}1)\,\sin\theta + 2\,\Delta H_j$$

ersetzt wird. Diese Beziehung stimmt zwar exakt nur im Grenzfall $\delta \to 0$, liefert aber auch bei größeren Neigungswinkeln, wie sie in realen Sägezahngittern vorkommen, eine akzeptable Näherung. Mit dieser Ersetzung liefert der letzte Term in Beziehung (2) keine geometrische Reihe mehr und muss je nach der konkreten Wahl der Höhenvariationen $\Delta H_j$ entsprechend berechnet werden. Für die Intensität im Beugungsbild ergibt sich damit

$$I_H(\theta) = I_{H0}\left(\frac{\sin\gamma}{\gamma}\right)^2 \left|\sum_{j=1}^{N} \exp(ik\Delta_{1j})\right|^2 = I_{H0}\left(\frac{\sin\gamma}{\gamma}\right)^2 \left|\sum_{j=1}^{N} \exp[ik(a(j-1)\sin\theta + 2\Delta H_j)]\right|^2 \quad (4)$$

mit einer Konstanten $I_{H0}$.

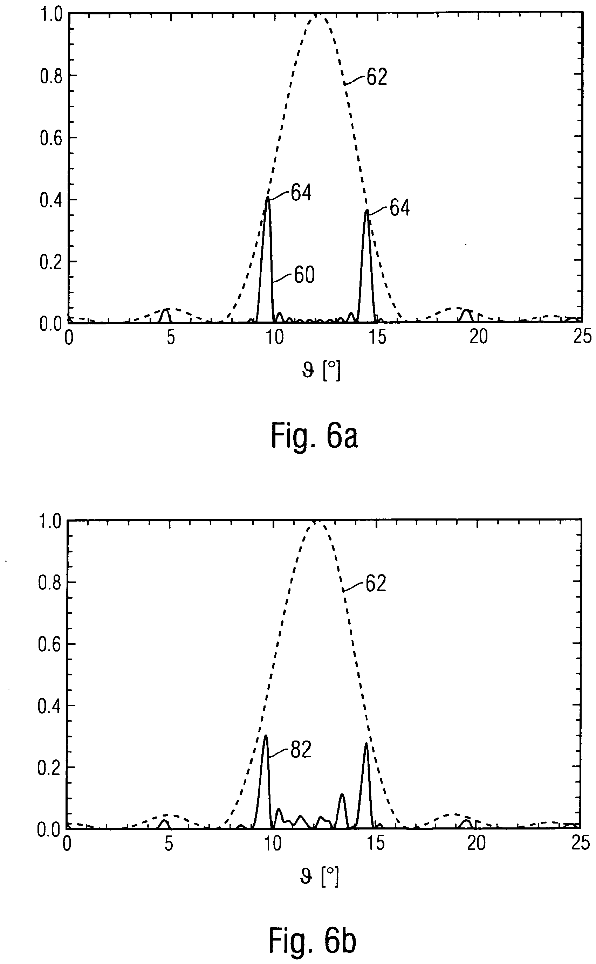

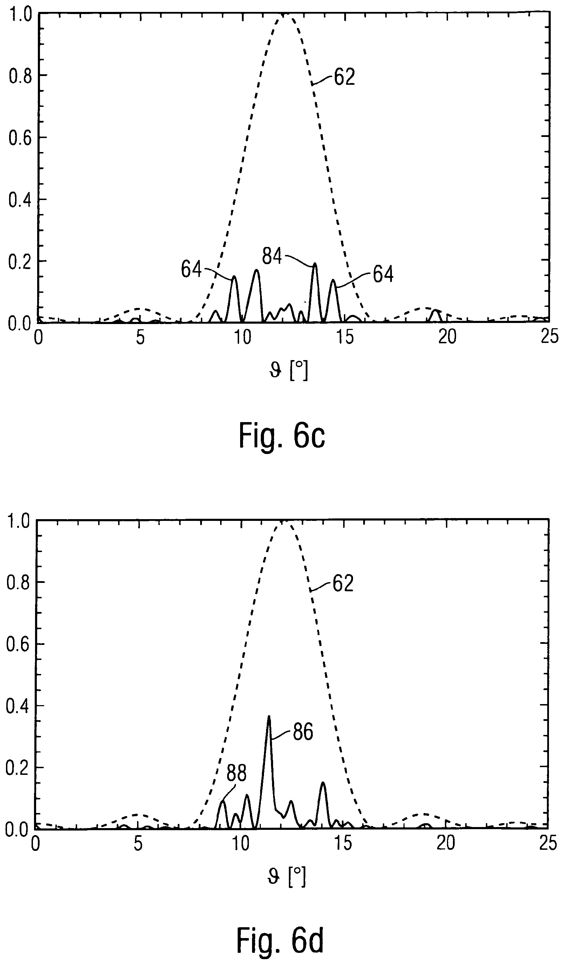

Fig. 6 zeigt nun beispielhaft für eine Wellenlänge von 500 nm berechnete Beugungsbilder erfindungsgemäßer Sägezahngitter 70 mit jeweils N = 10 Sägezahnelementen 72. Fig. 6(a) zeigt als Referenz zunächst nochmals das Beugungsbild 60 eines Sägezahngitters 30 ohne Höhenvariationen mit den Gitterreflexen 64. Für die Beugungsbilder der Figuren 6(b) bis (d) wurden die Höhenvariationen $\Delta H_j$ jeweils gemäß einer Pseudozufallszahlenverteilung zwischen Null und einem Maximalwert $\Delta H_{max}$ gewählt. Das Beugungsbild 62 eines einzelnen Sägezahnelements ist jeweils mit gestrichelten Linien eingezeichnet.

Wie in Fig. 6(b) gezeigt, findet man bereits bei einem Maximalwert $\Delta H_{max}$ = 70 nm ($\approx \lambda/7$) im Beugungsbild 82 eine wesentlich höhere Intensität zwischen den Gittermaxima als im Beugungsbild 60 der Fig. 6(a). Bei $\Delta H_{max}$ = 125 nm, entsprechend einer Viertel Wellenlänge, liegt die Intensität des Beugungsbilds 84 an bestimmten Stellen zwischen den Gitterreflexen 64 bereits höher als auf den Gitterreflexen 64, wie in Fig. 6(c) dargestellt. Schließlich sind, wie in Fig. 6(d) gezeigt, bei $\Delta H_{max}$ = 250 nm, also bei zufälligen Höhenvariationen von bis zu einer halben Wellenlänge, im Beugungsbild 86 die ursprünglichen Beugungsmaxima 64 der Fig. 6(a) nicht mehr zu erkennen. Zudem liegen die Beugungsmaxima 88 hier wesentlich dichter zusammen als bei dem Sägezahngitter 30 ohne zufällige Höhenvariation, so dass die oben angesprochenen Farb- und Flackereffekte deutlich reduziert und unter vielen Beleuchtungsbedingungen nicht mehr erkennbar sind.

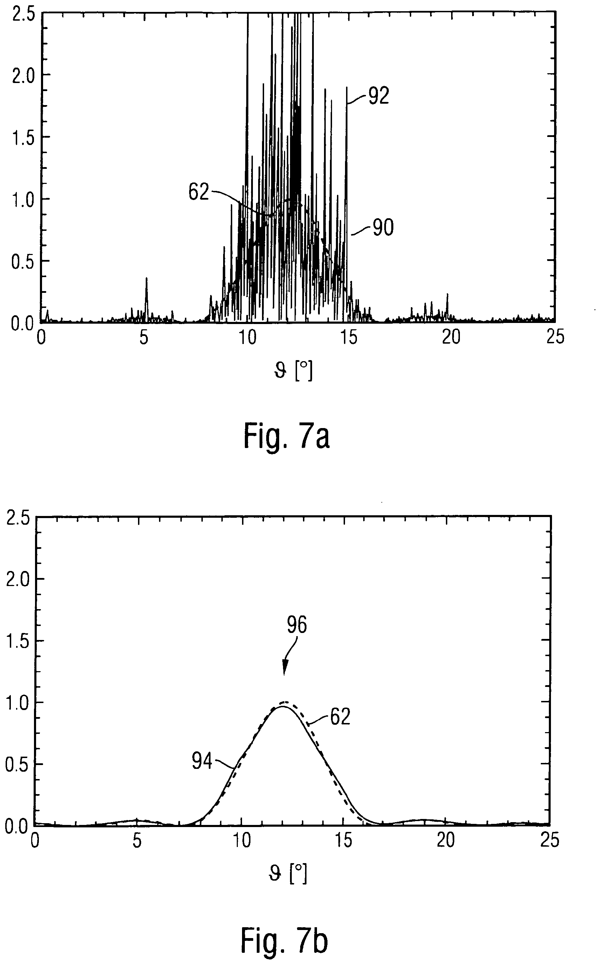

Je mehr Sägezahnelemente 72 das Sägezahngitter 70 enthält, desto dichter rücken die Beugungsmaxima 88 zusammen und können schließlich von einem Betrachter nicht mehr getrennt werden. Dies ist in Fig. 7 illustriert, die in (a) das Beugungsbild 90 eines Sägezahngitters 70 wie in Fig. 6(d), allerdings mit N = 100 Sägezahnelementen zeigt. Die dabei auftretenden Beugungsmaxima 92 können von einem Betrachter selbst bei perfekt kohärenter Beleuchtung nicht mehr aufgelöst werden. Nimmt man etwa einen Pupillendurchmesser von 5 mm und einen Betrachtungsabstand von 30 cm an, so sammelt das Auge Licht aus einem Winkelbereich von etwa einem Grad.

Der visuelle Eindruck für einen Betrachter entspricht also einem entsprechend geglätteten Beugungsbild 94, das in Fig. 7(b) dargestellt ist. Wie der Vergleich mit dem Beugungsbild 62 (gestrichelte Linie) eines einzelnen Sägezahnelements zeigt, entspricht das Beugungsbild 94 (durchgezogene Linie) des zufällig höhenvariierten Sägezahngitters 70 weitgehend dem Beugungsbild 62 eines Einzelsägezahns. Das globale Maximum 96 des Beugungsbilds 94 liegt bei etwa 12° und damit an einer Position, in die ein Sägezahngitter 30 ohne Höhenvariation praktisch keine Intensität reflektiert. Unerwünschte Farbspiele oder Flackern treten bei dem erfindungsgemäßen Sägezahngitter 70 mit N = 100 Sägezahnelementen somit nicht mehr auf. Während die Erfindung bisher am Beispiel eindimensionaler Gitter erläutert wurde, gelten die obigen Betrachtungen auch für zweidimensionale Gitter. Die Reflexionselemente sind in diesem Fall vorzugsweise durch kleine Mikroplanspiegel, Mikrohohlspiegel, Mikrowölbspiegel oder durch reflektierende Pyramidenstrukturen gebildet, die auf den Gitterplätzen eines zweidimensionalen Bravaisgitters angeordnet sind.

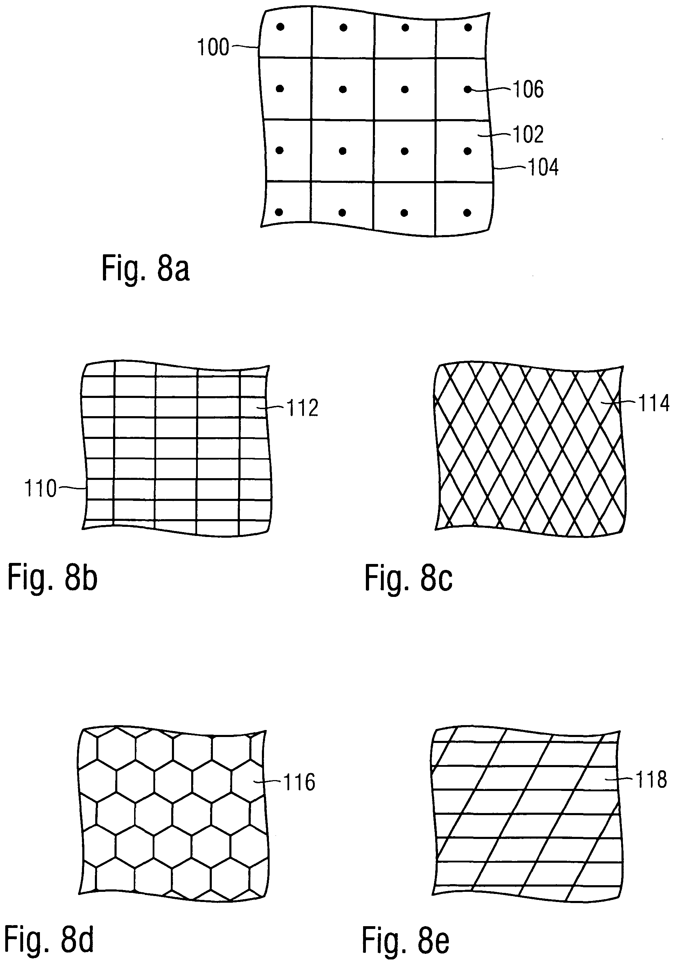

Fig. 8 zeigt zur Illustration jeweils in Aufsicht Ausschnitte aus einigen der möglichen erfindungsgemäßen Gestaltungen.

Alle periodischen ebenen Anordnungen lassen sich einem von fünf Bravaisgittern zuordnen, wobei zur eindeutigen Zuordnung das Bravaisgitter mit der höchsten Symmetrie gewählt wird. Beispielsweise zeigt Fig. 8(a) ein in einem Flächenbereich 100 vorliegendes optisch variables Flächenmuster 104 aus einer Mehrzahl von quadratischen Mikroplanspiegeln 102 einer Größe von 10 μm x 10 μm. Die Mikroplanspiegel 102 sind auf den Gitterpunkten 106 eines Quadratgitters angeordnet und weisen jeweils einen Neigungswinkel δ gegen die Ebene des Flächenbereichs 100 auf. Die Neigungswinkel δ der einzelnen Spiegel sind so gewählt, dass das Flächenmuster 104 bei Beleuchtung bzw. Betrachtung die gewünschten optisch variablen Darstellungen erzeugt. Der Flächenmuster 104 kann beispielsweise einen wandernden hellen Balken oder einen anderen kinematischen Effekt, eine gewölbt erscheinende Darstellung oder ein Stereogramm zeigen.

Um störende Beugungsbilder durch die periodische Gitteranordnung der Mikroplanspiegel 102 zu vermeiden, sind die Mikroplanspiegeln 102 in ihrer Höhe über dem Flächenbereich 100 gegeneinander versetzt, und zwar mit einem Höhenversatz, der im Ausführungsbeispiel zufällig in einem Bereich zwischen Null und 400 nm liegt. Ein derartiger zufälliger Höhenversatz kann beispielsweise mit Hilfe eines Computers durch eine Pseudozufallszahlenverteilung für jeden Mikroplanspiegel 102 bestimmt werden. Dadurch ist sichergestellt, dass die Phasendifferenz zwischen den an verschiedenen Mikroplanspiegeln 102 reflektierten Lichtstrahlen für alle Wellenlängen des sichtbaren Lichts zufällig im Bereich zwischen 0 und 2n liegt, so dass keine konstruktive Interferenz und damit kein Beugungsbild entsteht.

Ist das optisch variable Flächenmuster 104 in ein Medium mit Brechungsindex n > 1 eingebettet, beispielsweise indem das Flächenmuster 104 mit einer Schutzlackschicht beschichtet wird, kann der Höhenversatz auf den 1/nfachen Wert reduziert werden. Wird beispielsweise das Sägezahngitter 70 der Fig. 6(d) in einen Schutzlack mit n=1,5 eingebettet, so kann der maximale Höhenversatz $\Delta H_{max}$ = 250 nm bei gleicher optischer Wirkung auf $\Delta H_n$ = 170 nm verringert werden.

Fig. 8(b) zeigt als weiteres Beispiel ein in einem Flächenbereich vorliegendes optisch variables Flächenmuster 110 aus einer Mehrzahl von rechteckigen Reflexionselementen 112 einer Größe von 10 μm x 5 μm, die auf den Gitterpunkten eines Rechteckgitters angeordnet sind. Bei dem Ausführungsbeispiel der Fig. 8(c) sind die Reflexionselemente durch rautenförmige Mikroplanspiegel 114 gebildet, die auf den Gitterpunkten eines Rautengitters angeordnet sind, also eines Gitter aus Gitterzellen mit gleich langen Seiten und beliebigem Zwischenwinkel. Bei dem Ausführungsbeispiel der Fig. 8(d) sind die Reflexionselemente durch hexagonale Mikroplanspiegel 116 gebildet, die auf den Gitterpunkten eines Sechseckgitters angeordnet sind. Schließlich können die Reflexionselemente im allgemeinsten Fall auch auf den Gitterpunkten eines Parallelogrammgitters angeordnet sein, wie in Fig. 8(e) illustriert, und beispielsweise durch parallelogrammförmige Mikroplanspiegel 118 gebildet sein.

Ein erfindungsgemäßes Sicherheitselement kann auch mehrere Bereiche mit unterschiedlicher Gittersymmetrie enthalten. Eine derartige unterschiedliche Gittersymmetrie in verschiedenen Bereichen des Sicherheitselements kann als Echtheitskennzeichen höherer Stufe eingesetzt werden, das nur mit einer starken Lupe oder einem Mikroskop geprüft werden kann. Wegen der erfindungsgemäßen zufälligen Höhenvariation erzeugt das Flächenmuster insbesondere kein überlagertes Beugungsbild, das einen Hinweis auf die zugrunde liegende Gittersymmetrie der Reflexionselemente geben könnte.

Weiter können etwa bei einem Sicherheitselement für Ausweisdokumente dieselben Darstellungen durch Anordnungen mit unterschiedlicher Gittersymmetrie erzeugt werden. Die verwendete Gittersymmetrie kann beispielsweise je nach Ausgabejahr, Ausgaberegion, Seriennummer oder einer speziellen Personengruppe verschieden sein und so ein weiteres verstecktes Echtheitsmerkmal bilden.

Die erfindungsgemäße Gestaltung von Sicherheitselementen führt neben der Beseitigung der Beugungsreflexe vorteilhaft auch zu einem homogeneren visuellen Erscheinungsbild des Sicherheitselements. Bereiche mit einem Neigungswinkel von 0° erscheinen nämlich in herkömmlichen Gitteranordnungen oft brillanter, glatter und stärker spiegelnd als Bereiche mit größeren Neigungswinkeln, da in diesen Bereichen die Sägezahngitter bzw. Mikrospiegel zu einer großen ebenen Fläche verschmelzen, in der keine nennenswerte Streuung an Spiegelrändern mehr vorliegt. Dagegen enthalten durch den zufälligen Höhenversatz nunmehr auch Bereiche mit einem Neigungswinkel von $\delta = 0°$ Ränder zwischen benachbarten Reflexionselementen, so dass sich ein für alle Neigungswinkel homogener visueller Eindruck ergibt.

Bezugszeichenliste

| | |
|---|---|
| 10 | Banknote |
| 12 | Sicherheitselement |
| 14 | heller Balken |
| 16 | Unterkante |
| 18 | Oberkante |
| 20 | Sicherheitselement |
| 22 | Oberfläche |
| 24 | Unterkante |
| 26 | Oberkante |
| 28 | Detailausschnitte |
| 30 | Sägezahngitter |
| 32 | Sägezahnelemente |
| 40 | Lichtquelle |
| 42 | einfallendes Licht |
| 44 | Betrachter |
| 46 | reflektiertes Licht |
| 48 | Kipprichtung |
| 50 | einfallendes Licht |
| 50-1, 50-2, 50-3, 50-j, 50-k | Lichtstrahlen |
| 60 | Beugungsbild |
| 62 | Einhüllende |
| 64 | Gitterreflexe |
| 70 | Sägezahngitter |
| 72 | Sägezahnelemente |
| 74 | Flächenbereich |
| 76 | optisch variables Flächenmuster |
| 82, 84, 86 | Beugungsbilder |
| 88 | Beugungsmaxima |
| 90 | Beugungsbild |
| 92 | Beugungsmaxima |

| 94 | geglätteten Beugungsbild |
|---|---|
| 96 | globales Maximum |
| 100 | Flächenbereich |
| 102 | Mikroplanspiegel |
| 104 | optisch variables Flächenmuster |
| 106 | Gitterpunkte |
| 110 | optisch variables Flächenmuster |
| 112 | rechteckige Reflexionselemente |
| 114 | rautenförmige Mikroplanspiegel |
| 116 | hexagonale Mikroplanspiegel |
| 118 | parallelogrammförmige Mikroplanspiegel |

**Patentansprüche**

1. Sicherheitselement für Sicherheitspapiere, Wertdokumente und andere Datenträger, mit einem Substrat, das in einem Flächenbereich ein optisch variables Flächenmuster enthält, welches bei unterschiedlicher Beleuchtungs- und/ oder Betrachtungsrichtung unterschiedliche Darstellungen zeigt, wobei das optisch variable Flächenmuster aus einer in der Ebene des Flächenbereichs zumindest lokal periodischen Anordnung von Reflexionselementen (72) besteht, die zumindest lokal ein periodisches eindimensionales Gitter oder ein periodisches zweidimensionales Bravaisgitter bildet, und bei dem die Abmessungen der Reflexionselemente (72-j,72-k) in Periodizitätsrichtung zwischen 1 $\mu$m und 40 $\mu$m liegen, **dadurch gekennzeichnet, dass** die Reflexionselemente (72-j,72-k) in ihrer Höhe über dem Flächenbereich aperiodisch gegeneinander versetzt sind, und dabei um einen Höhenversatz gegeneinander versetzt sind, der zwischen 0 und $\Delta H_{max}$ liegt, wobei der Wert von $\Delta H_{max}$ zwischen 100 nm und 500 nm liegt.

2. Sicherheitselement nach Anspruch 1, **dadurch gekennzeichnet, dass** die Höhe der Reflexionselemente (72-j,72-k) über dem Flächenbereich gemäß einer Pseudozufallszahlenverteilung und/ oder in unregelmäßiger Weise variiert.

3. Sicherheitselement nach wenigstens einem der Ansprüche 1 bis 2, **dadurch gekennzeichnet, dass** die Periodizitätslänge bzw. die lokale Periodizitätslänge in mindestens einer Periodizitätsrichtung zwischen 1 $\mu$m und 40 $\mu$m, bevorzugt zwischen 2 $\mu$m und 30 $\mu$m, und besonders bevorzugt zwischen 3 $\mu$m und 10 $\mu$m liegt.

4. Sicherheitselement nach wenigstens einem der Ansprüche 1 bis 3, **dadurch gekennzeichnet, dass** das optisch variable Flächenmuster ein achromatisches Erscheinungsbild ohne Farbaufspaltungen oder überlagerte Beugungsbilder zeigt.

5. Sicherheitselement nach wenigstens einem der Ansprüche 1 bis 4, **dadurch gekennzeichnet, dass** die Reflexionselemente (72-j,72-k) durch Mikroplanspiegel, Mikrohohlspiegel, Mikrowölbspiegel oder durch reflektierende Pyramidenstrukturen gebildet sind.

6. Sicherheitselement nach wenigstens einem der Ansprüche 1 bis 5, **dadurch gekennzeichnet, dass** die Reflexionselemente (72-j,72-k) durch eine mit einer reflektierenden Schicht versehene Reliefstruktur, insbesondere eine Prägereliefstruktur gebildet sind.

7. Sicherheitselement nach Anspruch 6, **dadurch gekennzeichnet, dass** die reflektierende Schicht

   • durch eine reflektierende opake Metallschicht oder durch eine dünne oder gerasterte, semitransparente, metallische Beschichtung gebildet ist, oder
   • durch eine farbige oder farbkippende reflektierende Beschichtung gebildet ist, vorzugsweise durch ein Dünnschichtelement mit einer Reflexionsschicht, einer Absorberschicht und einer zwischen der Reflexionsschicht und der Absorberschicht angeordneten dielektrischen Abstandsschicht oder durch ein Dünnschichtelement mit zwei Absorberschichten und einer zwischen den beiden Absorberschichten angeordneten dielektrischen Abstandsschicht, oder
   • durch eine hochbrechende dielektrische Beschichtung oder eine cholesterische Flüssigkristallschicht gebildet ist.

8. Sicherheitselement nach wenigstens einem der Ansprüche 1 bis 7, **dadurch gekennzeichnet, dass** das optisch variable Flächenmuster mehrere Teilbereiche enthält, die unterschiedliche Darstellungen zeigen.

**9.** Sicherheitselement nach wenigstens einem der Ansprüche 1 bis 8, **dadurch gekennzeichnet, dass** das optisch variable Flächenmuster mit mindestens einem weiteren Sicherheitsmerkmal, insbesondere beugenden Hologrammstrukturen, kombiniert ist.

**10.** Datenträger mit einem Sicherheitselement nach wenigstens einem der Ansprüche 1 bis 9.

**11.** Datenträger nach Anspruch 10, **dadurch gekennzeichnet, dass** der Datenträger ein Wertdokument, wie eine Banknote, insbesondere eine Papierbanknote, eine Polymerbanknote, eine Folienverbundbanknote oder eine Urkunde, ein Pass oder eine Ausweiskarte ist.

**12.** Prägeform zum Erzeugen einer Prägestruktur, mit einem Hauptkörper, der in einem Flächenbereich ein optisch variables Flächenmuster enthält, welches bei unterschiedlicher Beleuchtungs- und/oder Betrachtungsrichtung unterschiedliche Darstellungen zeigt, wobei das optisch variable Flächenmuster aus einer in der Ebene des Flächenbereichs zumindest lokal periodischen Anordnung von Reflexionselementen (72-j,72-k) besteht, die zumindest lokal ein periodisches eindimensionales Gitter oder ein periodisches zweidimensionales Bravaisgitter bildet, und bei dem die Abmessungen der Reflexionselemente in Periodizitätsrichtung zwischen 1 $\mu$m und 40 $\mu$m liegen, **dadurch gekennzeichnet, dass** die Reflexionselemente in ihrer Höhe über dem Flächenbereich aperiodisch gegeneinander versetzt sind, und dabei um einen Höhenversatz gegeneinander versetzt sind, der zwischen 0 und $\Delta H_{max}$ liegt, wobei der Wert von $\Delta H_{max}$ zwischen 100 nm und 500 nm liegt.

**13.** Verfahren zum Herstellen eines Sicherheitselements zur Absicherung von Sicherheitspapieren, Wertdokumenten und andere Datenträgern, bei dem ein Substrat bereitgestellt wird und das Substrat in einem Flächenbereich mit einem optisch variablen Flächenmuster versehen wird, welches bei unterschiedlicher Beleuchtungs- und/oder Betrachtungsrichtung unterschiedliche Darstellungen zeigt, wobei das optisch variable Flächenmuster aus einer in der Ebene des Flächenbereichs zumindest lokal periodischen Anordnung von Reflexionselementen (72-j,72-k) gebildet wird, die zumindest lokal ein periodisches eindimensionales Gitter oder ein periodisches zweidimensionales Bravaisgitter bildet, und bei dem die Abmessungen der Reflexionselemente in Periodizitätsrichtung zwischen 1 $\mu$m und 40 $\mu$m liegen, **dadurch gekennzeichnet, dass** die Reflexionselemente (72-j,72-k) in ihrer Höhe über dem Flächenbereich aperiodisch gegeneinander versetzt werden, und dabei um einen Höhenversatz gegeneinander versetzt werden, der zwischen 0 und $\Delta H_{max}$ liegt, wobei der Wert von $\Delta H_{max}$ zwischen 100 nm und 500 nm liegt.

**Claims**

**1.** A security element for security papers, value documents and other data carriers, having a substrate that includes, in a surface region, an optically variable surface pattern that displays different depictions in different illumination and/ or viewing directions, the optically variable surface pattern being composed of an at least locally periodic arrangement of reflection elements (72) in the plane of the surface region, which forms, at least locally, a periodic one-dimensional grating or a periodic two-dimensional Bravais lattice, and in which the dimensions of the reflection elements (72-j, 72-k) in the periodicity direction lie between 1 $\mu$m and 40 $\mu$m, **characterized in that** the reflection elements (72-j, 72-k) are aperiodically offset against each other in their height above the surface region, specifically, are offset against each other by a height offset that lies between 0 and $\Delta$Hmax, the value of $\Delta$Hmax lying between 100 nm and 500 nm.

**2.** The security element according to claim 1, **characterized in that** the height of the reflection elements (72-j, 72-k) above the surface region varies according to a pseudo-random distribution and/ or in an irregular manner.

**3.** The security element according to at least one of claims 1 to 2, **characterized in that** the periodicity length or the local periodicity length in at least one periodicity direction lies between 1 $\mu$m and 40 $\mu$m, preferably between 2 $\mu$m and 30 $\mu$m, and particularly preferably between 3 $\mu$m and 10 $\mu$m.

**4.** The security element according to at least one of claims 1 to 3, **characterized in that** the optically variable surface pattern displays an achromatic appearance without color splittings or superimposed diffraction images.

**5.** The security element according to at least one of claims 1 to 4, **characterized in that** the reflection elements (72-j, 72-k) are formed by planar microreflectors, concave microreflectors, convex microreflectors or by reflective pyramid structures.

**6.** The security element according to at least one of claims 1 to 5, **characterized in that** the reflection elements (72-j, 72-k) are formed by a relief pattern provided with a reflective layer, especially an embossing relief pattern.

**7.** The security element according to claim 6, **characterized in that** the reflective layer

- is formed by a reflective opaque metal layer or by a thin or screened semitransparent metallic coating, or
- is formed by a colored or color-shifting reflective coating, preferably by a thin-film element having a reflection layer, an absorber layer and a dielectric spacing layer arranged between the reflection layer and the absorber layer, or by a thin-film element having two absorber layers and a dielectric spacing layer arranged between the two absorber layers, or
- is formed by a high-index dielectric coating or a cholesteric liquid crystal layer.

**8.** The security element according to at least one of claims 1 to 7, **characterized in that** the optically variable surface pattern includes multiple sub-regions that display different depictions.

**9.** The security element according to at least one of claims 1 to 8, **characterized in that** the optically variable surface pattern is combined with at least one further security feature, especially diffractive hologram patterns.

**10.** A data carrier having a security element according to at least one of claims 1 to 9.

**11.** The data carrier according to claim 10, **characterized in that** the data carrier is a value document, such as a banknote, especially a paper banknote, a polymer banknote, a foil composite banknote or a certificate, a passport or an identification card.

**12.** An embossing mold for producing an embossing pattern, having a main body that includes, in a surface region, an optically variable surface pattern that displays different depictions in different illumination and/or viewing directions, the optically variable surface pattern being composed of an at least locally periodic arrangement of reflection elements (72-j, 72-k) in the plane of the surface region, which forms, at least locally, a periodic one-dimensional grating or a periodic two-dimensional Bravais lattice, and in which the dimensions of the reflection elements in the periodicity direction lie between 1 $\mu$m and 40 $\mu$m, **characterized in that** the reflection elements are aperiodically offset against each other in their height above the surface region, specifically, are offset against each other by a height offset that lies between 0 and $\Delta$Hmax, the value of $\Delta$Hmax lying between 100 nm and 500 nm.

**13.** A method for manufacturing a security element for securing security papers, value documents and other data carriers, in which a substrate is provided, and the substrate is provided in a surface region with an optically variable surface pattern that displays different depictions in different illumination and/ or viewing directions, the optically variable surface pattern being formed from an at least locally periodic arrangement of reflection elements (72-j, 72-k) in the plane of the surface region, which forms, at least locally, a periodic one-dimensional grating or a periodic two-dimensional Bravais lattice, and in which the dimensions of the reflection elements in the periodicity direction lie between 1 $\mu$m and 40 $\mu$m, **characterized in that** the reflection elements are aperiodically offset against each other in their height above the surface region, specifically, are offset against each other by a height offset that lies between 0 and $\Delta$Hmax, the value of $\Delta$Hmax lying between 100 nm and 500 nm.

**Revendications**

**1.** Élément de sécurité pour papiers de sécurité, titres et autres supports de données, comportant un substrat qui contient dans une zone de sa surface un motif de surface visuellement variable qui, avec un sens d'éclairage et/ou d'observation différent, présente des représentations différentes, le motif de surface visuellement variable étant composé d'un dispositif d'éléments réfléchissants au moins périodiques localement dans le plan de la zone de surface et qui constitue du moins localement un réseau périodique unidimensionnel ou un réseau de Bravais périodique bidimensionnel et dans lequel les dimensions des éléments réfléchissants (72-j, 72-k) se situent dans le sens de périodicité entre 1 $\mu$m et 40 $\mu$m, **caractérisé en ce que** les éléments réfléchissants (72-j, 72-k) sont décalés apériodiquement les uns par rapport aux autres en hauteur au-dessus de la zone de surface et sont alors décalés les uns par rapport à raison d'un décalage en hauteur qui se situe entre 0 et $\Delta H_{max}$, la valeur de $\Delta H_{max}$ étant comprise entre 100 nm et 500 nm.

**2.** Élément de sécurité selon la revendication 1, **caractérisé en ce que** la hauteur des éléments réfléchissants (72-j, 72-k) au-dessus de la zone de surface varie suivant une répartition numérique pseudo-aléatoire et/ou de manière irrégulière.

3. Élément de sécurité selon au moins une des revendications 1 à 2, **caractérisé en ce que** la longueur de périodicité ou la longueur de périodicité locale dans au moins un sens de périodicité est comprise entre 1 μm et 40 μm, de préférence entre 2 μm et 30 μm et très préférentiellement entre 3 μm et 10 μm.

4. Élément de sécurité selon au moins une des revendications 1 à 3, **caractérisé en ce que** le motif de surface variable visuellement présente un aspect achromatique sans dédoublement de couleurs ni diagrammes de réfraction superposée.

5. Élément de sécurité selon au moins une des revendications 1 à 4, **caractérisé en ce que** les éléments réfléchissants (72-j, 72-k) sont constitués par des micro-miroirs plans, des micro-miroirs creux, des micro-miroirs bombés ou par des structures pyramidales réfléchissants.

6. Élément de sécurité selon au moins une des revendications 1 à 5, **caractérisé en ce que** les éléments réfléchissants (72-j, 72-k) sont constitués par une structure en relief pourvue d'une couche réfléchissante, en particulier une structure en relief gaufrée.

7. Élément de sécurité selon la revendication 6, **caractérisé en ce que** la couche réfléchissante

• est constituée par une couche métallique opaque réfléchissante ou par un revêtement métallique transparent mince ou tramé, ou
• par un revêtement réfléchissant coloré ou à basculement de couleur, de préférence par un élément accouché mince doté d'une couche réfléchissante, d'une couche absorbante et d'une couche d'espacement diélectrique disposée entre la couche réfléchissante et la couche absorbante ou par un élément à couche mince doté de deux couches absorbantes et d'une couche d'espacement diélectrique disposée entre les deux couches absorbantes, ou
• par un revêtement diélectrique à haute diffraction ou une couche de cristaux liquides cholestérique.

8. Élément de sécurité selon au moins une des revendications 1 à 7, **caractérisé en ce que** le motif de surface visuellement variable présente plusieurs sous-parties qui présentent des représentations différentes.

9. Élément de sécurité selon au moins une des revendications 1 à 8, **caractérisé en ce que** le motif de surface visuellement variable est combiné à au moins une autre caractéristique de sécurité, en particulier des structures à hologrammes diffractives.

10. Support de données comprenant un élément de sécurité selon au moins une des revendications 1 à 9.

11. Support de données selon la revendication 10, **caractérisé en ce que** le support de données est un titre, comme un billet de banque, en particulier un billet de banque en papier, un billet de banque en polymère, un billet de banque en film composite ou un document officiel, un passeport ou une carte d'identité.

12. Moule de gaufrage pour la réalisation d'une structure gaufrée, comprenant un corps principal qui contient dans une zone de sa surface un motif de surface visuellement variable qui, avec un sens d'éclairage et/ou d'observation différent, présente des représentations différentes, le motif de surface visuellement variable étant composé d'un dispositif d'éléments réfléchissants (72-j, 72-k) au moins périodique localement dans le plan de la zone de surface et qui constitue du moins localement un réseau périodique unidimensionnel ou un réseau de Bravais bidimensionnel périodique et dans lequel les dimensions des éléments réfléchissants se situent dans le sens de périodicité entre 1 μm et 40 μm, **caractérisé en ce que** les éléments réfléchissants sont décalés apériodiquement les uns par rapport aux autres en hauteur au-dessus de la zone de surface et sont alors décalés les uns par rapport à raison d'un décalage en hauteur qui se situe entre 0 et $\Delta H_{max}$, la valeur de $\Delta H_{max}$ étant comprise entre 100 nm et 500 nm.

13. Procédé de fabrication d'un élément de sécurité pour la sécurisation de papiers de sécurité, de titres et d'autres supports de données, dans lequel un substrat est mis à disposition et le substrat est pourvu dans une zone de surface d'un motif de surface variable visuellement qui, avec un sens d'éclairage et/ou d'observation différent, présente des représentations différentes, le motif de surface visuellement variable étant composé d'un dispositif d'éléments réfléchissants (72-j, 72-k) au moins périodique localement dans le plan de la zone de surface et qui constitue du moins localement un réseau périodique unidimensionnel ou un réseau de Bravais périodique bidimensionnel et dans lequel les dimensions des éléments réfléchissants se situent dans le sens de périodicité entre 1 μm et 40 μm, **caractérisé en ce que** les éléments réfléchissants (72-j, 72-k) sont décalés apériodiquement les uns par rapport aux autres en hauteur au-dessus de la zone de surface et sont alors décalés les uns par rapport à raison d'un décalage en hauteur qui se situe entre 0 et $\Delta H_{max}$, la valeur de $\Delta H_{max}$ étant comprise entre 100 nm et 500 nm.

10

11

18

14 — 12

16

10

## Fig. 1

40 — ☀        👁 — 44

42        ϑ        46

20

48        26        22        24        48

32        32        32

28        28        28

## Fig. 2

Fig. 3

Fig. 4

Fig. 5a

Fig. 5b

Fig. 6a

Fig. 6b

**Fig. 6c**

**Fig. 6d**

Fig. 7a

Fig. 7b

Fig. 8a

Fig. 8b

Fig. 8c

Fig. 8d

Fig. 8e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0868313 B1
- WO 2010034420 A1
- EP 1397259 B1
- WO 2007079851 A
- DE 102009056934

**In der Beschreibung aufgeführte Nicht-Patentliteratur**

- **E. HECHT.** Optics. Addision Wesley, 2002